**Europäisches Patentamt**

(19) **European Patent Office**

**Office européen des brevets**

(11) Veröffentlichungsnummer: **0 014 195 B1**

(12) # EUROPÄISCHE PATENTSCHRIFT

(45) Veröffentlichungstag der Patentschrift:
16.09.81

(51) Int. Cl.³: **G 01 N 27/72**, G 01 R 33/12

(21) Anmeldenummer: **80890011.2**

(22) Anmeldetag: **30.01.80**

(54) **Verfahren zur Prüfung nichtmagnetisierbarer Schwerstangen.**

(30) Priorität: **30.01.79 AT 669/79**

(43) Veröffentlichungstag der Anmeldung:
**06.08.80 Patentblatt 80/16**

(45) Bekanntmachung des Hinweises auf die Patenterteilung:
**16.09.81 Patentblatt 81/37**

(84) Benannte Vertragsstaaten:
**DE FR GB IT NL**

(56) Entgegenhaltungen:
**DE-A1-2 411 211**
**GB-A-1 304 406**
**GB-A-1 471-595**
**US-A-3 378 761**
**H. BLUMENAUER «Werkstoffprüfung»,**
**VEB Deutscher Verlag für Grundstoffindustrie,**
**Leipzig 1977, Seiten 300 bis 309**

(73) Patentinhaber: **VEREINIGTE EDELSTAHLWERKE AKTIENGESELLSCHAFT (VEW), Elisabethstrasse 12, A-1010 Wien (AT)**

(72) Erfinder: **Kohl, Heinz, Dr. Dipl.-Ing., Moriggigasse 13, A-2630 Ternitz (AT)**

(74) Vertreter: **Widtmann, Georg, Dr., Elisabethstrasse 12, A-1010 Wien (AT)**

ACTORUM AG.

Verfahren zur Prüfung nichtmagnetisierbarer Schwerstangen

Die Erfindung betrifft ein Verfahren zur Prüfung nichtmagnetisierbarer Schwerstangen auf ihre Magnetisierbarkeit.

Zur Kontrolle der räumlichen Lage (Azimut und Deklination) einer Tiefbohrung während des Niederbringens werden magnetische Messgeräte (z.B. Single-Shot, Multi-Shot, Flux Gate-Sonde) verwendet. Um diese Geräte bei der Messung nicht zu stören, sind nichtmagnetisierbare Schwerstangen im Bohrstrang an der Stelle der durchzuführenden Messung (d.h. möglichst anschliessend an den Bohrmeissel) erforderlich. Die Anforderungen an die Genauigkeit der Richtbohrungen nehmen ständig zu. So werden z.B. von einer Bohrinsel aus bis zu 40 abgelenkte Bohrungen niedergebracht, die, von oben betrachtet, fächerförmig auseinanderlaufen. Es ist verständlich, dass eine auch nur geringfügige Beeinflussung des Kompasses oder entsprechender magnetischer Messgeräte durch die nichtmagnetisierbare Schwerstange unzulässige Fehler der Richtungsmessung ergeben kann.

Als Mass der Magnetisierbarkeit wird die magnetische Permeabilität $\mu$ verwendet. Als technische Grenze der Magnetisierbarkeit gilt ein Wert der relativen Permeabilität $\mu_r$ von 1,01. Für nichtmagnetisierbare Schwerstangen werden demnach heute Werte $\mu_r < 1,01$ oder auch $\mu_r < 1,005$ vorgeschrieben. Die Bestimmung oder Kontrolle dieses Wertes kann an herausgearbeiteten Proben oder mit «Permeabilitätstastern» punktweise an der Oberfläche der Stangen erfolgen. Dieser, heute allgemein übliche Messwert hat den Nachteil, dass kein direkter Zusammenhang zur Gradabweichung des Kompasses durch die Schwerstange angegeben werden kann. Weiters ist es nicht möglich, das gesamte Volumen der Schwerstange zu prüfen, da der Permeabilitätstaster nur die Oberflächenzone erfasst.

(Das Messvolumen beträgt ca. 1 cm³. Wollte man nur die Oberfläche zur Gänze überprüfen, wären bis zu 70 000 Einzelmessungen erforderlich!)

Bei Schwerstangen als technisches Produkt (die bisher bekannten Schwerstangen sind dickwandige Rohre mit bis zu 260 mm Durchmesser, 9 m Länge und ca. 3000 kg Masse) sind Inhomogenitäten nicht auszuschliessen. Ein an der Oberfläche liegender, örtlich eng begrenzter Bereich höherer Permeabilität beeinflusst möglicherweise das in der Bohrung der Schwerstange befindliche Messgerät in keiner Weise, während ein ähnlicher Fehler in der Nähe der Bohrung vom Permeabilitätstaster nicht erfasst wird, die Messung aber empfindlich stören kann.

Der Erfindung liegt die Aufgabe zugrunde, zur Vermeidung der vorstehend angeführten Nachteile ein möglichst einfaches und verlässliches Verfahren für die Prüfung nichtmagnetischer Schwerstangen auf ihre Magnetisierbarkeit zu schaffen, mit welchem das gesamte Stangenvolumen erfasst und dem diesbezüglichen Messwert eine bestimmte Gradabweichung eines Kompasses zugeordnet werden kann. Gemäss der Erfindung wird die eben angeführte Aufgabe bei einem Verfahren der eingangs genannten Art dadurch gelöst, dass eine Relativbewegung zwischen Schwerstange und einer im Bereich der zu prüfenden Schwerstange angeordneten Sonde zur Messung der Feldstärke des erdmagnetischen Feldes oder deren Gradienten durchgeführt wird, dass der Einfluss der Schwerstange auf das Ausgangssignal der Sonde unter wohldefinierten Prüfbedingungen, wie Geometrie der Messanordnung, Grösse der Geschwindigkeit der Relativbewegung, gemessen wird und dass dem Ausgangssignal eine bestimmte Gradabweichung eines Kompasses zugeordnet wird, indem in einer vorangehenden Kalibrierung unter denselben Prüfbedingungen der Zusammenhang zwischen magnetischen Fehlern der Schwerstange und der Gradabweichung des Kompasses bestimmt wird.

Gegenüber den bekannten Methoden zur Bestimmung der Magnetisierbarkeit bietet das erfindungsgemässe Verfahren die wesentlichen Vorteile, dass es dasselbe in besonders einfacher und verlässlicher Weise gestattet, nichtmagnetische Schwerstangen auf ihre Magnetisierbarkeit zu prüfen, wobei das gesamte Stangenvolumen erfasst und dem diesbezüglichen Messwert eine bestimmte Gradabweichung des Kompasses zugeordnet werden kann.

Es gibt an sich bekannte käufliche Geräte, mit denen die Feldstärke des erdmagnetischen Feldes nach Grösse und Richtung (Feldstärkenmessung) oder die örtliche Änderung dieser Feldstärke (Feldgradientenmessung) bestimmt werden kann.

Bringt man einen ferromagnetischen Körper in den Messbereich der Sonde(n) eines solchen Gerätes, so ergibt sich ein Ausschlag an dessen Anzeigegerät, der hier als Ausgangssignal bezeichnet wird.

Bei der Durchführung des erfindungsgemässen Verfahrens erwies es sich als besonders einfach, den Gradienten der Feldstärke des erdmagnetischen Feldes zu messen und bei ruhender Schwerstange die Sonde zu bewegen.

In manchen Fällen, beim Auftreten nachteiliger Störungen, ist es jedoch günstiger, wenn bei ruhender Sonde die Schwerstange bewegt wird, obwohl dies einen erheblichen technischen Aufwand bedingt.

Zur Prüfung durchbohrter Schwerstangen ist es zweckmässig, dass die Sonde in die Bohrung der Schwerstange eingeführt wird.

Hingegen ist es insbesondere bei der Prüfung nicht durchgebohrter Schwerstangen in vielen Fällen günstig, wenn eine oder mehrere weitere Sonden vorgesehen sind, welche zur Durchführung der Messung im konstanten Abstand von der Schwerstange entlang derselben geführt werden.

Bei der Messung der Feldstärke des erdmagnetischen Feldes wirken sich nachteilige Störungen aus der näheren und weiteren Umgebung wesentlich stärker aus als bei der Messung des Gradienten dieser Feldstärke. Beispielsweise kann bei der Messung dieser Feldstärke ein grösseres Fahrzeug noch erhebliche Störungen verursachen, wenn es 60 m von der benützten Sonde entfernt ist. Eine solche Messung ist in bebautem, bewohntem Gelände höchstens mit ruhenden Sonden möglich. Hierbei ist die Bewegung der bis 3000 kg schweren bekannten Schwerstangen relativ zur ruhenden Sonde mit einem erheblichen technischen Aufwand verbunden.

Überdies sei erwähnt, dass die für den eben erwähnten Zweck benützte Fördereinrichtung nicht magnetisierbar sein dar. Für die erforderliche Relativbewegung zwischen Sonde und Prüfkörper kommen verschiedene Bewegungsarten, z.B. Längs- und Drehbewegungen und Bewegungen nach Schraubenlinien in Frage.

Der Zusammenhang zwischen einem bekannten Ausgangssignal der Sonde(n) und der Gradabweichung des betreffenden Kompasses kann dadurch gefunden werden, dass derselbe an die Stelle der betreffenden Sonde(n) gebracht und die von den Testkörpern verursachte Kompassabweichung bestimmt wird. Das eben erwähnte Ausgangssignal ist gemäss den vorstehenden Darlegungen ein Mass für die vorhandene magnetische Feldstärke bzw. deren Gradienten.

Bei der Durchführung des erfindungsgemässen Verfahrens ist eine entsprechende Kalibrierung mit Testkörpern erforderlich. Bei einer zweiten Kalibrierung wird gemäss dem zuvor Angeführten ein Kompass an die Stelle der Sonde(n) gegeben und der Zusammmenhang zwischen Ausgangssignal und Kompassabweichung ermittelt.

So ist letztlich die zu erwartende Beeinflussung des Kompasses durch die nichtmagnetisierbare Schwerstange oder durch Inhomogenitäten in der Schwerstange quantitativ erfassbar.

Nachstehend wird die Erfindung in einem Ausführungsbeispiel erläutert, für das folgendes gilt: Das erfindungsgemässe Verfahren wird mittels einer Vorrichtung durchgeführt, welche zur Messung des Gradienten der Feldstärke des erdmagnetischen Feldes zwei an sich bekannte Sonden aufweist, bei denen es sich um sogenannte Förstersonden handelt. Diese beiden Sonden sind antiparallel zueinander in einem Plexiglasbehälter angeordnet und ergeben demgemäss ein dem Gradienten der Feldstärke des jeweils vorhandenen magnetischen Feldes proportionales Ausgangssignal im Sinne der Erfindung. Die beiden in Rede stehenden Sonden werden an einer nichtmagnetisierbaren Führungsstange mit definierter Geschwindigkeit verdrehungsfrei in die Bohrung einer Schwerstange eingebracht und es wird der Einfluss derselben auf das Ausgangssignal der Sonden gemessen. An der Stelle eines Fehlers in der Schwerstange, z.B. infolge eines eingeprägten Eisenteilchens, ergibt sich eine Änderung des Ausgangssignales am Anzeigegerät.

Anhand der vorstehend angeführten erfindungsgemässen Kalibrierung kann aus der Grösse des Ausgangssignales entschieden werden, ob und in welchem Ausmass der Fehler die Richtungsmessung stören würde, d.h. welche Gradabweichung am Kompass auftreten würde.

Es können auch ungebohrte Schwerstangen geprüft werden, indem zwei Sonden mit einem entsprechenden Sondenhalter aussen an den betreffenden Schwerstangen entlang geführt werden. Für jede Sondenanordnung ist eine eigene Kalibrierung durchzuführen.

**Patentansprüche**

1. Verfahren zur Prüfung nichtmagnetisierbarer Schwerstangen auf ihre Magnetisierbarkeit, dadurch gekennzeichnet, dass eine Relativbewegung zwischen Schwerstange und einer im Bereich der zu prüfenden Schwerstange angeordneten Sonde zur Messung der Feldstärke des erdmagnetischen Feldes oder deren Gradienten durchgeführt wird, dass der Einfluss der Schwerstange auf das Ausgangssignal der Sonde unter wohldefinierten Prüfbedingungen, wie Geometrie der Messanordnung, Grösse der Geschwindigkeit der Relativbewegung, gemessen wird und dass dem Ausgangssignal eine bestimmte Gradabweichung eines Kompasses zugeordnet wird, indem in einer vorangehenden Kalibrierung unter denselben Prüfbedingungen der Zusammenhang zwischen magnetischen Fehlern der Schwerstange und der Gradabweichung des Kompasses bestimmt wird.

2. Verfahren nach Anspruch 1, dadurch gekennzeichnet, dass bei ruhender Schwerstange die Sonde bewegt wird.

3. Verfahren nach Anspruch 1, dadurch gekennzeichnet, dass bei ruhender Sonde die Schwerstange bewegt wird.

4. Verfahren nach einem der Ansprüche 1 bis 3, dadurch gekennzeichnet, dass zur Prüfung durchbohrter Schwerstangen die Sonde in die Bohrung der Schwerstange eingeführt wird.

5. Verfahren nach einem der vorangegangenen Ansprüche, dadurch gekennzeichnet, dass weitere Sonden vorgesehen sind, welche zur Durchführung der Messung im konstanten Abstand von der Schwerstange entlang derselben geführt werden.

**Revendications**

1. Procédé pour le contrôle de l'aimantebilité de masses-tiges non-aimantables, caractérisé en ce qu'il est effectué un déplacement relatif entre la masse-tige et une sonde disposée dans le voisinage de la masse-tige à contrôler, afin de mesurer l'intensité du champ géomagnétique ou son gradient, que l'influence exercée par la masse-tige sur le signal de sortie de la sonde dans des conditions de contrôle bien définies, telles que géométrie du dispositif de mesure, grandeur de la vitesse du déplacement relatif, est mesurée, et que l'on associe au signal de sortie un écart angulaire déterminé d'une boussole, en déterminant au cours d'une opération de calibrage antérieure effectuée dans les mêmes conditions de contrôle la corrélation entre les défauts magnétiques de la masse-tige et l'écart angulaire de la boussole.

2. Procédé selon la revendication 1, caractérisé en ce que, la masse-tige étant maintenue immobile, on déplace la sonde.

3. Procédé selon la revendication 1, caractérisé en ce que, la sonde étant maintenue immobile, on déplace la masse-tige.

4. Procédé selon une quelconque des revendications 1 à 3, caractérisé en ce que, lorsqu'il s'agit de contrôler des masses-tiges creuses percées de bout en bout, la sonde est introduite à l'intérieure de l'alésage centrale de la masse-tige.

5. Procédé selon une quelconque des revendications précédentes, caractérisé en ce qu'il est prévu d'autres sondes et que, pour effectuer l'opération de mesure, on fait coulisser lesdites sondes le long de la masse-tige à une distance constante de cette dernière.

## Claims

1. A method of testing non-magnetizable drill stems for their magnetizability, characterised in that a relative movement is effected between the drill stem to be tested and a probe located in the region of the said drill stem for measuring the field strength of the terrestrial magnetic field or the gradient of the field strength, the influence of the drill stem upon the output signal of the probe is measured under welldefined testing conditions, such as the geometry of the measuring equipement and the speed of the relative movement, and a certain deviation in terms of degrees of a compass is associated with the output signal, while the relationship between magnetic errors of the drill stem and the deviation of the compass is determined in a preliminary calibration under the same testing conditions.

2. A method according to claim 1, characterised in that when the drill stem is stationary the probe is moved.

3. A method according to claim 1, characterised in that when the probe is stationary the drill stem is moved.

4. A method according to any one of claims 1 to 3, characterised in that in order to test through-bored drill stems the probe is inserted in the bore of the drill stem.

5. A method according to any one of the preceding claims, characterised in that further probes are provided which are guided along the drill stem at a constant distance therefrom for carrying out the measurement.